# EUROPEAN PATENT APPLICATION

(11) **EP 4 852 237 A1**
(43) Date of publication of application: **09.12.2026**
(21) Application number: 25180479.5
(22) Date of filing: 03.06.2025
(51) Int. Cl.: H01S 3/00, H01S 3/23, H05G 2/00, G02F 1/03, H01S 3/223, H01S 3/10

(54) **APPARATUS FOR USE IN A LASER-PRODUCED PLASMA RADIATION SOURCE**

(71) Applicant: ASML Netherlands B.V., 5500 AH Veldhoven (NL)
(72) Inventor: TULEK, Abdullah, 5500AH Veldhoven (NL); MATHEW, John Philip, 5500AH Veldhoven (NL); RUDRA, Sukumar, 5500AH Veldhoven (NL)
(74) Representative: ASML Netherlands B.V.

(57) **Abstract**

An apparatus suitable for use in a laser-produced plasma source is disclosed. The apparatus comprises: a pulsed laser source; an electric system; an electro-optic modulator; and a temperature-control system. The pulsed laser source (for example a seed laser) is configured to emit source radiation pulses at a pulse repetition rate from a range of repetition rates. The electric system configured to provide an electric signal. The electro-optic modulator is coupled to the electric system and is configured to receive the source radiation pulses and to produce modified radiation pulses under control of the electric signal. The temperature-control system is operable to control a temperature of the electro-optic modulator. In particular, the temperature-control system is configured to control the temperature of the electro-optic modulator in dependence on the pulse repetition rate of the pulsed laser source.

## Description

### FIELD

The present invention relates to an apparatus suitable for use in a laser-produced plasma source. For example, the apparatus may form part of a seed laser module of a laser-produced plasma source. The present invention also relates to a drive laser device for a laser-produced plasma radiation source. The present invention also relates to a laser-produced plasma radiation source. The laser-produced plasma source may be suitable for generating extreme ultraviolet (EUV) radiation. The present invention also relates to an exposure apparatus (for example a lithographic apparatus). In particular, the lithographic apparatus may comprise an extreme ultraviolet (EUV) lithographic apparatus. The present invention also relates to a method of calibrating the apparatus that is suitable for use in a laser-produced plasma source.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern at a patterning device (e.g., a mask or a reticle) onto a layer of radiation-sensitive material (resist) provided on a substrate.

To project a pattern on a substrate, a lithographic apparatus may use electromagnetic radiation. The wavelength of this radiation determines the minimum size of features which can be formed on the substrate. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

One known way to generate EUV radiation uses a laser-produced plasma (LPP) radiation source. Within a laser-produced plasma source, a stream of fuel targets (for example droplets of tin) may be generated (for example by a fuel target generator) and each of the fuel targets may be irradiated by a pulse of radiation so as to form a plasma. The plasma may emit radiation, for example comprising extreme ultra-violet (EUV) radiation, and this radiation may be collected and focused by an optical element for use (for example in an EUV lithographic apparatus). In some embodiments, each fuel target may be irradiated by a plurality of pulses. For example, it is known to illuminate each fuel target with a first pulse of radiation (also referred to as a pre-pulse) to alter a shape of the target and, subsequently, with a second pulse of radiation (also referred to as a main pulse) to generate the plasma. Further, it is known to control a shape of the second pulse (main pulse) in order to increase a conversion efficiency of the LPP source. For example, the peak of the second pulse (main pulse) may be preceded by a small amount of additional radiation immediately in advance of the main pulse of radiation (and which may be referred to as a "pedestal"). The presence of such a pedestal has been found to increase the EUV output power of the LPP source.

It may be desirable to provide new apparatus for use in an LPP source, and a new LPP source comprising the same, that at least partially address one or more problems associated with existing arrangements whether such problems are identified herein or otherwise.

### SUMMARY

According to a first aspect of the present disclosure there is provided an apparatus suitable for use in a laser-produced plasma source, the apparatus comprising: a pulsed laser source configured to emit source radiation pulses at a pulse repetition rate from a range of repetition rates; an electric system configured to provide an electric signal; an electro-optic modulator coupled to the electric system and configured to receive the source radiation pulses and to produce modified radiation pulses under control of the electric signal; and a temperature-control system operable to control a temperature of the electro-optic modulator; wherein the temperature-control system is configured to control the temperature of the electro-optic modulator in dependence on the pulse repetition rate of the pulsed laser source.

The apparatus according to the first aspect of the present disclosure may form part of a seed laser module of a laser-produced plasma source and is advantageous, as now discussed.

Within a laser-produced plasma source, a stream of fuel targets (for example droplets of tin) may be generated and each of the fuel targets may be irradiated by a pulse of radiation so as to form a plasma. The plasma may emit radiation, for example comprising extreme ultra-violet (EUV) radiation, and this radiation may be collected and focused by an optical element for use (for example in an EUV lithographic apparatus). In some embodiments, each fuel target may be irradiated by a plurality of pulses. For example, it is known to illuminate each fuel target with a first pulse of radiation (also referred to as a pre-pulse) to alter a shape of the target and, subsequently, with a second pulse of radiation (also referred to as a main pulse) to generate the plasma. Further, it is known to control a shape of the second pulse (main pulse) in order to increase a conversion efficiency of the LPP source. For example, the peak of the second pulse (main pulse) may be preceded by a small amount of additional radiation immediately in advance of the main pulse of radiation (and which may be referred to as a "pedestal"). The pedestal may start 400-500 ns before the main pulse and may have an intensity rising to of the order of 1 % of the intensity of the peak of the main pulse. The off droplet pedestal energy is typically ~7 mJ. The presence of such a pedestal has been found to increase the EUV output power of the LPP source.

The fuel targets may be generated by a fuel target generator and the pulses of radiation may be generated by a drive laser. In turn, the drive laser may comprise a seed laser module and one or more optical amplifiers. It will be appreciated that the generation of the fuel targets may be synchronized with the generation of the pulses of radiation. For example, the fuel target generator and the drive laser may be controlled by a common controller (or one may control the operation or the other). Typically, a laser-produced plasma may be operable to operate at a range of different repetition rates (for example, repetition rates of the order of 50 kHz and with a range of repetition rates of the order of 5 kHz).

Advantageously, the electric system and electro-optic modulator of the apparatus according to the first aspect of the present disclosure may allow for a shape of pulses of radiation (which may form the main pulses of an LPP source) to be controlled. For example, with the correct thin film polarizer (TFP) configuration, the electric signal may generate modified pulses that comprise a pedestal portion (for example after amplification), which may increase a conversion efficiency of the LPP source.

However, the inventors have observed that in some scenarios that there are fluctuations in the pedestal "waveform", which can manifest itself at various repetition rates of the LPP source. That is, the intensity of the pedestal oscillates. The inventors have realized that, since electro-optic modulators typically comprise a piezoelectric material, the electric signal can excite sound waves in the material, which gives rise to a time-dependent refractive index. If the electric signal excites any resonant frequencies of the electro-optic modulator this can give rise to significant (and observable) fluctuations in the pedestal.

The temperature-control system can control the temperature of the electro-optic modulator. Advantageously, in turn, this can provide control over the resonant frequencies for oscillating stress, or sound waves, in the electro-optic modulator. Furthermore, since the temperature-control system is configured to control the temperature of the electro-optic modulator in dependence on the pulse repetition rate of the pulsed laser source, it can be used to ensure that the electric signal does not excite a resonant frequency of the electro-optical modulator. For example, as explained above, the LPP source may have a desired range of different repetition rates (for example a range of repetition rates of the order of 5 kHz). It may be that for at least a first range of repetition rates within this range, at a reference temperature *Tᵣ,* the electric signal does not excite a resonant frequency of the electro-optical modulator but for at least a second range of repetition rates within this range, at the reference temperature *Tᵣ*, the electric signal does excite at least one resonant frequency of the electro-optical modulator. The reference temperature *Tᵣ* may, for example, be a nominal operating temperature of the electro-optical modulator. For such embodiments, the temperature-control system may be configured to control the temperature of the electro-optic modulator so as to be: (a) at the reference temperature *Tᵣ* when the pulsed laser source is operating at a pulse repetition rate within the at least a first range of repetition rates; and (b) at a temperature *Tᵣ ±* Δ*T* that is shifted (by heating or cooling) from the reference temperature when the pulsed laser source is operating at a pulse repetition rate within the at least a second range of repetition rates. The magnitude of the shift of the temperature Δ*T* from the reference temperature *Tᵣ* may be sufficient to ensure that the electric signal does not excite a resonant frequency of the electro-optical modulator.

Note that in some embodiments, the apparatus according to the first aspect of the present disclosure may be operable to operate in more than two temperature settings of the type described above. For example, there may be a third range of repetition rates and within this third range, at the reference temperature *Tᵣ,* the electric signal does excite at least one resonant frequency of the electro-optical modulator. Note the second range of repetition rates may excite one resonant frequency of the electro-optical modulator and the third range of repetition rates may excite a different resonant frequency of the electro-optical modulator. The temperature-control system may be configured to control the temperature of the electro-optic modulator so as to be: (a) at the reference temperature *Tᵣ* when the pulsed laser source is operating at a pulse repetition rate within the at least a first range of repetition rates; (b) at a temperature *Tᵣ* ± Δ*T*₁ that is shifted (by heating or cooling) from the reference temperature when the pulsed laser source is operating at a pulse repetition rate within the at least a second range of repetition rates; and (c) at a temperature *Tᵣ* ± Δ*T*₂ that is shifted (by heating or cooling) from the reference temperature by a different amount (Δ*T*₂) when the pulsed laser source is operating at a pulse repetition rate within the at least a third range of repetition rates; and so on. In general, the temperature-control system may be configured to control the temperature of the electro-optic modulator so as to be: (a) at the reference temperature *Tᵣ* for some repetition rates; and (b) at *n* shifted temperatures *Tᵣ* ± Δ*Tᵢ* that are each shifted (by heating or cooling) from the reference temperature when the pulsed laser source is operating at a pulse repetition rate within one of *n* different ranges of repetition rates (where *n =* 0,1,2,3, ...).

Note that in some embodiments, the electro-optic modulator may be operated like a switch: by applying an activation voltage at some times (synchronized with the radiation pulses) and applying no voltage at other times. Therefore, in some embodiments, the electric signal may comprise a train of square wave pulses. Furthermore, note that such an electric signal may comprise a plurality of Fourier components and that the amplitudes of these Fourier components may be dependent on: a repetition rate and a duty cycle of the train of square wave pulses.

The temperature-control system may be configured to control the temperature of the electro-optic modulator such that the electric signal does not excite a resonant frequency of the electro-optical modulator.

It will be appreciated that, as used here, the electric signal may be considered to not excite a resonant frequency of the electro-optical modulator if it drives the electro-optical modulator to oscillate or vibrate at that resonant frequency with an amplitude that is below a threshold value. It will be further appreciated that different threshold values may apply for different resonant frequencies. It will be further appreciated that, in general, it may not be possible to specify these frequencies.

In practice, the electric signal may be considered to not excite a resonant frequency of the electro-optical modulator if it does not give rise a noticeable modulation (time variation or oscillation) of the intensity of the pedestal. Furthermore, as explained above, it may be possible to empirically identify, for a given temperature of the electro-optical modulator, certain repetition rates of the electric signal that will give rise to an unacceptable modulation or waviness of the intensity of the pedestal.

The range of repetition rates that the pulsed laser source can emit source radiation pulses at may comprise at least one first repetition rate or a first range of repetition rates and at least one second repetition rate or a second range of repetition rates. The temperature-control system may be configured to control the temperature of the electro-optic modulator such that: when the pulsed laser source is operating at a repetition rate of the at least one first repetition rate or the first range of repetition rates the temperature of the electro-optic modulator is maintained at a first temperature *T*₁; and when the pulsed laser source is operating at a repetition rate of the at least one second repetition rate or the second range of repetition rates the temperature of the electro-optic modulator is maintained at a temperature that is different to the first temperature.

In use, the pulsed laser source may have a desired range of different repetition rates. For example, the pulsed laser source may operate at a repetition rate range of 50-55 kHz. It may be that for the at least one first repetition rate or range of repetition rates, at the first temperature *T*₁, the electric signal does not excite a resonant frequency of the electro-optical modulator but for the at least a second repetition rate or range of repetition rates, at the first temperature *T*₁, the electric signal does excite at least one resonant frequency of the electro-optical modulator. When the pulsed laser source is operating at a pulse repetition rate from the at least one second repetition rate or range of repetition rates the electro-optical modulator may be maintained at a temperature *T*₁ ± Δ*Tᵢ* that is shifted (by heating or cooling) from the first temperature. The magnitude of the shift of the temperature Δ*Tᵢ* from the first temperature *T*₁ may be sufficient to ensure that the electric signal does not excite a resonant frequency of the electro-optical modulator. Note that, in general, different temperature shifts Δ*Tᵢ* may be used for different ranges of repetition rates that would, if operating at the first temperature *T*₁, excite different resonant frequencies.

The temperature-control system may comprise: at least one temperature sensor configured to determine a temperature of the electro-optical modulator; at least one heater and/or cooler operable to heat and/or cool the electro-optical modulator so as to influence the temperature of the electro-optical modulator; and a processor configured to: (a) receive at least one signal from the at least one temperature sensor that is indicative of the temperature of the electro-optical modulator; and (b) to send at least one control signal to the at least one heater and/or cooler so as to maintain the temperature of the electro-optical modulator at a set-point temperature that is dependent on the pulse repetition rate of the pulsed laser source.

The processor may be referred to as a controller. The processor may implement any suitable (feedback) control loop to maintain the electro-optical modulator.

The apparatus may further comprise memory. The processor may be operable to access from the memory a set-point temperature that is dependent on the pulse repetition rate of the pulsed laser source.

As discussed further below, the memory may store a look-up table or similar.

The apparatus may further comprise a main processor configured to control operation of: (a) the pulsed laser source; (b) the electric system; and (c) the temperature-control system.

The main processor may be referred to as a main controller. The main controller may, for example, control the repetition rate of the pulsed laser source. The main controller may, for example, control the electric signal generated by the electric system. The main controller may, for example, control the temperature-control system so as to control the temperature of the electro-optic modulator (in dependence on the pulse repetition rate of the pulsed laser source).

Note the main processor may be separate from the processor of the temperature-control system. Alternatively, a common processor may provide the functionality of both the main processor and the processor of the temperature-control system.

The main processor may be operable to receive a control signal and to control operation of at least one of: the pulsed laser source; the electric system; and/or the temperature-control system in dependence on the control signal.

For example, the control signal may be generated by processor or controller of an LPP radiation source that the apparatus according to the first aspect forms part of.

The electric signal may comprise a plurality of gating pulses at the pulse repetition rate in phase with the source radiation pulses.

The gating pulses may, for example, comprise top-hat or rectangular pulses.

The gating pulses may have a duration of the order of 50 ns.

The electric system and/or the electro-optic modulator may be configured such that the modified radiation pulses produced by the electro-optic modulator comprise a pedestal portion after amplification.

The pedestal portion may start of the order of 400-500 ns before the main pulse and may have an intensity rising to of the order of 1 % of an intensity of a peak of the main pulse. The off droplet pedestal energy may be of the order of 7 mJ.

It will be appreciated that the pedestal portion may be generated in a number of different ways, as is known in the art. In general, the apparatus may allow some leakage of radiation through the electro-optic modulator (in addition to the radiation that passes the electro-optic modulator due to the gating pulses) so as to form the pedestal.

For example, the electric signal may comprise one or more secondary pulses between successive pairs of the gating pulses. Atleast one of: an amplitude of one or more secondary pulses; a duration of one or more secondary pulses, and a phase of one or more secondary pulses relative to a relevant one of the gating pulses may be controlled to achieve a desired pedestal portion.

Additionally or alternatively, a small leakage may be created by (thin film) polarizers that may form part of the electro-optic modulator so as to achieve a desired pedestal portion.

The pedestal portion may precede a main peak of the modified radiation pulses by of the order of 400 to 500 ns.

The electro-optic modulator may comprise: a first polarizer arranged to receive radiation from the pulsed laser source; a first crystal arranged to receive radiation from the first polarizer; and a second polarizer oriented orthogonally to the first polarizer and arranged to receive radiation from the first crystal.

The first crystal may have a controllable birefringence (that can be controlled by the electric signal).

The electro-optic modulator may further comprise: a second crystal arranged to receive radiation from the second polarizer; and a third polarizer oriented parallel to the first polarizer and arranged to receive radiation from the second crystal.

The second crystal may also have a controllable birefringence (that can be controlled by the electric signal).

According to a second aspect of the present disclosure there is provided a drive laser device for a laser produced plasma radiation source, the drive laser device comprising: a seed laser module comprising the apparatus according to the first aspect of the present disclosure; and an amplifier configured to amplify the modified radiation pulses to form drive radiation pulses.

The drive laser device may further comprise a pre-pulse seed laser module configured to output pre-pulse seed pulses in advance of the modified radiation pulses output by the seed laser module.

According to a third aspect of the present disclosure there is provided a laser produced plasma source comprising: a target material delivery system configured to deliver target material to a target location; and a drive laser device according to the second aspect of the present disclosure arranged to irradiate target material at the target location with drive radiation pulses so as to form a plasma.

The laser produced plasma source may further comprise a radiation collector configured to collect radiation emitted by the plasma.

According to a fourth aspect of the present disclosure there is provided an exposure apparatus comprising the laser produced plasma source according to the third aspect of the present disclosure.

The exposure apparatus may further comprise: an illumination system operable to receive radiation emitted by the plasma and to illuminate an illumination region therewith; a support structure configured to support a patterning device such that the patterning device is positionable in the illumination region; a substrate table configured to support a substrate; and a projection system operable to form an image of a patterning device supported by the support structure on a substrate supported by the substrate table.

According to a fifth aspect of the present disclosure there is provided a method of calibrating the apparatus according to the first aspect of the present disclosure, the method comprising: maintaining the electro-optic modulator at a fixed temperature and, for a plurality of different repetition rates within the range of repetition rates: using the apparatus to generate radiation pulses comprising a pedestal portion succeeded by a peak portion; and determining whether or not the pedestal portions of the generated radiation pulses oscillate.

The method according to the fifth aspect allows for the apparatus to be calibrated. In particular, for the fixed temperature of the electro-optical modulator, it allows for any repetition rates of the electric signal that will give rise to an unacceptable modulation or waviness of the intensity of the pedestal to be empirically identified. This information can be stored in memory (for example as a look up table) for that fixed temperature and can be used by the temperature-control system of the apparatus to control the temperature of the electro-optic modulator (in dependence on the pulse repetition rate of the pulsed laser source) so as to avoid excitation of any resonant frequencies of the electro-optical modulator in use.

The fixed temperature may, for example, comprise a nominal operating temperature of the electro-optic modulator.

Note that it may be that, in practice, the oscillation of the pedestal portions of the generated radiation pulses may only be apparent after amplification of an initial seed pulse. Therefore, in some embodiments, the determination of whether or not the pedestal portions of the generated radiation pulses oscillate may be made after the initial seed pulse has been amplified.

Determining whether or not the pedestal portions of the generated radiation pulses oscillate may comprise: determining a shape of the generated radiation pulses; fitting a function to the determined shape so as to determine at least one parameter; and determining whether or not the pedestal portions of the generated radiation pulses oscillate based on one or more of the at least one parameters.

For example, the fitting function may be performed as a least squares fit to determine a plurality of parameters. The function may, for example, comprise a polynomial function. It may be determined that the pedestal portions of the generated radiation pulses do not oscillate if the coefficients of one or more higher-order terms are below a threshold value. Alternatively, the function may comprise the sum of: (a) a portion (for example a low-order polynomial) that can describe a nominal shape of the pedestal potion; and (b) an oscillating portion (for example a sine curve). It may be determined that the pedestal portions of the generated radiation pulses do not oscillate if the coefficient(s) of the oscillating portion are below a threshold value.

The method may further comprise, for each of the plurality of different repetition rates, storing in memory whether or not the pedestal portions of the generated radiation pulses oscillate.

The method may further comprise, for each of the plurality of different repetition rates, storing in memory a suitable operating temperature for that repetition rate.

For each of the plurality of different repetition rates, if the pedestal portions of the generated radiation pulses do not oscillate then the fixed temperature may be stored as a suitable operating temperature for that repetition rate.

The fixed temperature *T_{f}* may be referred to as a first temperature *T*₁ or a reference temperature *Tᵣ.*

For each of the plurality of different repetition rates, if the pedestal portions of the generated radiation pulses do oscillate then a different temperature to the fixed temperature may be stored as a suitable operating temperature for that repetition rate.

The different temperature may be a shifted temperature *T_{f}* ± Δ*Tᵢ* that is shifted (by heating or cooling) from the fixed temperature *T_{f}.* Note that, in general, different temperature shifts Δ*Tᵢ* may be used for different repetition rates that would, if operating at the fixed temperature *T_{f},* excite different resonant frequencies.

The plurality of different repetition rates within the range of repetition rates may comprise a plurality of equally spaced repetition rates.

In some embodiments, this sampling of the range of repetition rates may be sufficiently fine so as to observe all sub-ranges of the range of repetition rates that may result in an unacceptable level of oscillation of the pedestal portion.

### BRIEF DESCRIPTION OF THE DRAWINGS

Embodiments of the invention will now be described, by way of example only, with reference to the accompanying schematic drawings, in which:
- Figure 1 depicts a lithographic system comprising a lithographic apparatus and a laser-produced plasma radiation source;
- Figure 2 depicts an exemplary amplification system for use in a laser system of the laser-produced plasma radiation source shown in Figure 1;
- Figure 3 depicts a new apparatus suitable for use in a laser-produced plasma source according to an embodiment of the present disclosure which may, for example, be used as, or form at least a part of, a seed laser system that forms part of the drive laser system shown in Figure 2;
- Figure 4A shows an example pulse shape (energy versus time) of a radiation pulse emitted by the pulsed laser source shown in Figure 3;
- Figure 4B shows an enlarged view of an example pulse shape (energy versus time) of a modified radiation pulse produced by an electro-optic modulator of the apparatus shown in Figure 3;
- Figure 4C shows an example pulse shape (energy versus time) of a pulse that may be formed by amplification of the modified radiation pulse shape shown in Figure 4B and which comprises a main portion and a pedestal portion;
- Figure 5A shows an enlarged portion of the pedestal portion of a pulse shape of the form shown in Figure 4C which has been generated at a first repetition rate such that the intensity of the pedestal portion oscillates;
- Figure 5B shows an enlarged portion of the pedestal portion of a pulse shape of the form shown in Figure 4C which has been generated at a second repetition rate such that the intensity of the pedestal portion does not oscillate;
- Figure 6 schematically shows an example embodiment of a temperature-control system that may form part of the apparatus shown in Figure 3;
- Figure 7 schematically shows an alternative form of an electro-optic modulator 130 that may form part of the apparatus shown in Figure 3;
- Figure 8 schematically shows a method of calibrating the apparatus shown in Figure 3 according to an embodiment of the present disclosure;
- Figure 9 schematically shows the steps of a procedure which, as part of the method shown in Figure 8, is carried out for each of a plurality of different repetition rates within a range of repetition rates; and
- Figure 10 schematically shows some optional steps which may be carried out to determine whether or not a pedestal portion of a generated radiation pulse oscillates (as part of the procedure shown in Figure 9.

### DETAILED DESCRIPTION

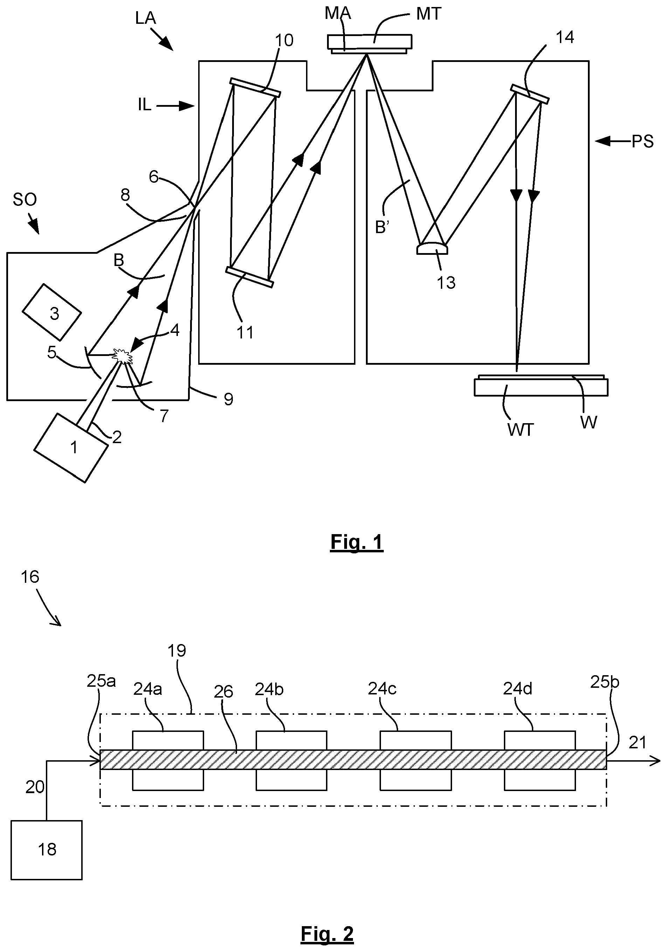

Figure 1 shows a lithographic system comprising a radiation source SO and a lithographic apparatus LA. The radiation source SO is configured to generate an EUV radiation beam B and to supply the EUV radiation beam B to the lithographic apparatus LA. The lithographic apparatus LA comprises an illumination system IL, a support structure MT configured to support a patterning device MA (e.g., a mask), a projection system PS and a substrate table WT configured to support a substrate W.

The illumination system IL is configured to condition the EUV radiation beam B before the EUV radiation beam B is incident upon the patterning device MA. Thereto, the illumination system IL may include a facetted field mirror device 10 and a facetted pupil mirror device 11. The faceted field mirror device 10 and faceted pupil mirror device 11 together provide the EUV radiation beam B with a desired cross-sectional shape and a desired intensity distribution. The illumination system IL may include other mirrors or devices in addition to, or instead of, the faceted field mirror device 10 and faceted pupil mirror device 11.

After being thus conditioned, the EUV radiation beam B interacts with the patterning device MA. As a result of this interaction, a patterned EUV radiation beam B' is generated. The projection system PS is configured to project the patterned EUV radiation beam B' onto the substrate W. For that purpose, the projection system PS may comprise a plurality of mirrors 13, 14 which are configured to project the patterned EUV radiation beam B' onto the substrate W held by the substrate table WT. The projection system PS may apply a reduction factor to the patterned EUV radiation beam B', thus forming an image with features that are smaller than corresponding features on the patterning device MA. For example, a reduction factor of 4 or 8 may be applied. Although the projection system PS is illustrated as having only two mirrors 13, 14 in Figure 1, the projection system PS may include a different number of mirrors (e.g., six or eight mirrors).

The substrate W may include previously formed patterns. Where this is the case, the lithographic apparatus LA may be operable to align the image formed by the patterned EUV radiation beam B' with a pattern previously formed on the substrate W.

A relative vacuum, i.e. a small amount of gas (e.g. hydrogen) at a pressure well below atmospheric pressure, may be provided in the radiation source SO, in the illumination system IL, and/or in the projection system PS.

The radiation source SO shown in Figure 1 is, for example, of a type which may be referred to as a laser produced plasma (LPP) source. A laser system 1, which may, for example, include a CO₂ laser, is arranged to deposit energy via a laser beam 2 into a fuel, such as tin (Sn) which is provided from, e.g., a fuel emitter 3. Although tin is referred to in the following description, any suitable fuel may be used. The fuel may, for example, be in liquid form, and may, for example, be a metal or alloy. The fuel emitter 3 may comprise a nozzle configured to direct tin, e.g. in the form of droplets, along a trajectory towards a plasma formation region 4. The laser beam 2 is incident upon the tin at the plasma formation region 4. The deposition of laser energy into the tin creates a tin plasma 7 at the plasma formation region 4. Radiation, including EUV radiation, is emitted from the plasma 7 during de-excitation and recombination of electrons with ions of the plasma.

The EUV radiation from the plasma is collected and focused by a collector 5. Collector 5 comprises, for example, a near-normal incidence radiation collector 5 (sometimes referred to more generally as a normal-incidence radiation collector). The collector 5 may have a multilayer mirror structure which is arranged to reflect EUV radiation (e.g., EUV radiation having a desired wavelength such as 13.5 nm). The collector 5 may have an ellipsoidal configuration, having two focal points. A first one of the focal points may be at the plasma formation region 4, and a second one of the focal points may be at an intermediate focus 6, as discussed below.

The laser system 1 may be spatially separated from the radiation source SO. Where this is the case, the laser beam 2 may be passed from the laser system 1 to the radiation source SO with the aid of a beam delivery system (not shown) comprising, for example, suitable directing mirrors and/or a beam expander, and/or other optics. The laser system 1, the radiation source SO and the beam delivery system may together be considered to be a radiation system.

Radiation that is reflected by the collector 5 forms the EUV radiation beam B. The EUV radiation beam B is focused at intermediate focus 6 to form an image at the intermediate focus 6 of the plasma present at the plasma formation region 4. The image at the intermediate focus 6 acts as a virtual radiation source for the illumination system IL. The radiation source SO is arranged such that the intermediate focus 6 is located at or near to an opening 8 in an enclosing structure 9 of the radiation source SO.

Although Figure 1 depicts the radiation source SO as a laser produced plasma (LPP) source, any suitable source such as a discharge produced plasma (DPP) source or a free electron laser (FEL) may be used to generate EUV radiation.

Figure 2 shows an exemplary drive laser system 16 for use in the laser system 1 of the radiation source SO shown in Figure 1. The drive laser system 16 may comprise a laser system 18 and an amplification system 19.

The laser system 18 may comprise a laser, for example, a CO₂ laser. The laser system 18 may be configured to generate a laser beam 20. The laser system 18 may be referred to as a seed laser system 18 and the laser beam 20 may be referred to as a seed laser beam 20. The laser beam 20 may comprise a plurality of pulses. The drive laser system 16 may comprise one or more optical elements, such as one or more mirrors, beam expanders, lenses and/or other elements (not shown), for directing the laser beam 20 into the amplification system 19.

The amplification system 19 may also be referred to as an optical amplification system. The amplification system 19 comprises a plurality of optical amplifiers 24a-24d, four of which are shown in Figure 2. However, it will be appreciated that in other embodiments, the system may comprise more or fewer than four optical amplifiers. In general, the amplification system 19 comprises at least one optical amplifier. Each of the optical amplifiers 24a-24d is configured to amplify the laser beam 20 so as to produce an output laser beam 21. The output laser beam 21 may form the laser beam 2 shown in Figure 1 and which is incident upon the tin at the plasma formation region 4.

The amplification system 19 comprises an optical system 26. The optical system 26 may also be referred to as a relay optical system. The optical system 26 is configured to optically couple or connect at least one of the optical amplifiers 24a-24d to at least one other of the optical amplifiers 24a-24d. In the present embodiment, the optical system 26 is configured to optically couple or connect the amplifiers 24a-24d in series to each other. For example, the optical system 26 may be configured to optically couple or connect the optical amplifiers 24a-24d to each other so that the laser beam 20 is directed from a first amplifier 24a to a second amplifier 24b, from the second amplifier 24b to a third amplifier 24c and from the third amplifier 24c to a fourth amplifier 24d. The optical system 26 may comprise a plurality of optical elements, such as a plurality of mirrors, lenses, telescopes and/or the like. The optical amplifiers 24a-24d may be arranged to sequentially amplify the laser beam 20.

The amplification system 19 may comprise an input 25a, e.g. at which the laser beam 20 enters the amplification system 19. The amplification system 19 may comprise an output 25b, e.g. at which the amplified laser beam 21 exits the amplification system 19. At the input 25a of the amplification system 19, the laser beam may have a power between about 100W and 200W, such as about 140W. At the output 25b of the amplification system 19, the amplified laser beam 21 may have a power between about 25kW and 50kW.

Some embodiments of the present disclosure relate to a new apparatus suitable for use in a laser-produced plasma source. In particular, some embodiments of the present disclosure relate to a new apparatus that may be used as, or form at least a part of, the laser system 18 (or a seed laser system 18) that forms part of the drive laser system 16 shown in Figure 2.

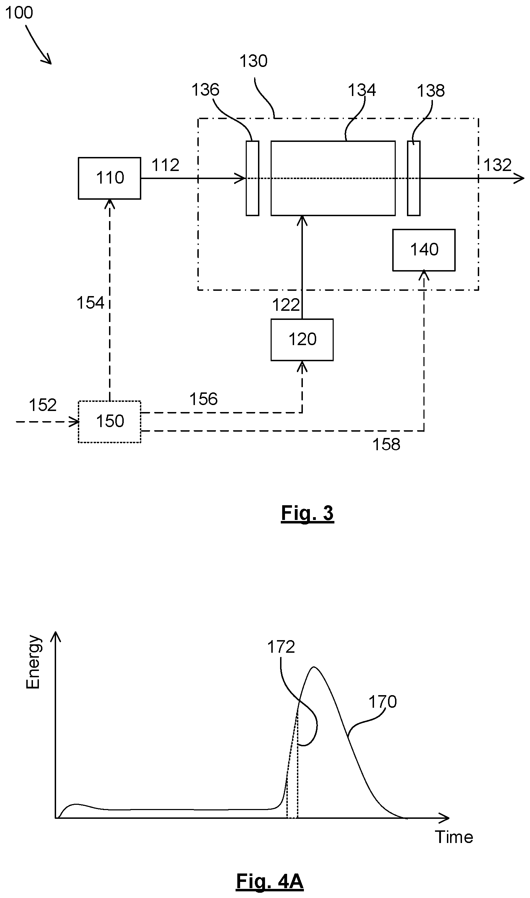

Figure 3 schematically shows an example embodiment of an apparatus 100 suitable for use in a laser-produced plasma source. The apparatus 100 comprises: a pulsed laser source 110; an electric system 120; an electro-optic modulator 130; and a temperature-control system 140.

The pulsed laser source 110 is configured to emit source radiation pulses 112 at a pulse repetition rate from a range of repetition rates. The pulsed laser source 110 may be, for example, a master oscillator power amplifier (MOPA) CO₂ laser that emits laser pulses 112. In some implementations, the pulsed laser source 110 can be a laser that emits light having a wavelength of 1 micron (µm), such as, for example neodymium-doped yttrium aluminum garnet (Nd:YAG) laser.

The electric system 120 is configured to provide an electric signal 122. In some embodiments, the electric signal 122 may comprise a plurality of gating pulses at the pulse repetition rate in phase with the source radiation pulses 112. The gating pulses may, for example, comprise top-hat or rectangular pulses. In some embodiments, the gating pulses may have a duration of the order of 50 ns.

The electro-optic modulator 130 is coupled to the electric system 120. The electro-optic modulator 130 is configured to receive the source radiation pulses 112. The electro-optic modulator 130 is further configured to produce modified radiation pulses 132 under control of the electric signal 122.

The temperature-control system 140 is operable to control a temperature of the electro-optic modulator 130. In particular, the temperature-control system 140 is configured to control the temperature of the electro-optic modulator 130 in dependence on the pulse repetition rate of the pulsed laser source 110.

The apparatus 100 shown in Figure 3 may form part of a seed laser module 18 of a laser-produced plasma source SO and is advantageous, as now discussed.

Within a laser-produced plasma source SO a stream of fuel targets (for example droplets of tin) may be generated and each of the fuel targets may be irradiated by a pulse of radiation so as to form a plasma 7. The plasma 7 may emit radiation B, for example comprising extreme ultra-violet (EUV) radiation, and this radiation may be collected and focused by an optical element 5 for use (for example in an EUV lithographic apparatus). In some embodiments, each fuel target may be irradiated by a plurality of pulses. For example, it is known to illuminate each fuel target with a first pulse of radiation (also referred to as a pre-pulse) to alter a shape of the target and, subsequently, with a second pulse of radiation (also referred to as a main pulse) to generate the plasma. Further, it is known to control a shape of the second pulse (main pulse) in order to increase a conversion efficiency of the LPP source SO. For example, the peak of the second pulse (main pulse) may be preceded by a small amount of additional radiation immediately in advance of the main pulse of radiation (and which may be referred to as a "pedestal"). The pedestal may start 400-500 ns before the main pulse and may have an intensity rising to of the order of 1 % of the intensity of the peak of the main pulse. The off droplet pedestal energy is typically ~7 mJ. The presence of such a pedestal has been found to increase the EUV output power of the LPP source.

The fuel targets may be generated by a fuel target generator 3 and the pulses of radiation may be generated by a drive laser 1, 16. In turn, the drive laser 1, 16 may comprise a seed laser module 18 and one or more optical amplifiers 24a-24d. It will be appreciated that the generation of the fuel targets may be synchronized with the generation of the pulses of radiation. For example, the fuel target generator 3 and the drive laser 1, 16 may be controlled by a common controller (or one may control the operation or the other). Typically, a laser-produced plasma SO may be operable to operate at a range of different repetition rates (for example, repetition rates of the order of 50 kHz and with a range of repetition rates of the order of 5 kHz).

Advantageously, the electric system 120 and electro-optic modulator 130 of the apparatus 100 shown in Figure 3 may allow for a shape of pulses of radiation (which may form the main pulses of an LPP source) to be controlled. For example, with an appropriate thin film polarizer (TFP) configuration, the electric signal 122 may generate modified pulses 132 that comprise a pedestal portion (for example after amplification), which may increase a conversion efficiency of the LPP source SO.

For example, in some embodiments, the electro-optic modulator 130 may comprise: a first crystal 134; a first polarizer 136; and a second polarizer 138. The first polarizer 136 may be arranged to receive radiation 112 from the pulsed laser source 110. The first crystal 134 may be arranged to receive radiation from the first polarizer 136. The second polarizer 138 may be oriented orthogonally to the first polarizer 136 and may be arranged to receive radiation from the first crystal 134.

The first crystal 134 may have a controllable birefringence (that can be controlled by the electric signa 122). The first polarizer 136 and the second polarizer 138 may each comprise a thin film polarizer (TFP).

For example, Figure 4A shows an example pulse shape 170 (energy versus time) of a radiation pulse 112 emitted by the pulsed laser source 110. Note that the pulse shape 170 of the source radiation pulse 112 shown in Figure 4A is for illustrative purposes, and the source radiation pulses 112 can have other pulse shapes. Furthermore, note that here the horizontal axis is time and therefore, the "front" of the pulse (the earliest part) is on the left in Figure 4A and the "rear" of the pulse (the latest part) is on the right in Figure 4A.

In use, the electro-optic modulator 130 may act as a switch that allows only a portion of source radiation pulse 112 to pass therethrough. For example, when a first type of electric signal 122 (or no electric signal 122 at all) is supplied the first crystal 134 of the electro-optic modulator 130, radiation from the source radiation pulses 112 may be blocked by the electro-optic modulator 130 and when a second type of electric signal 122 is supplied the first crystal 134 of the electro-optic modulator 130, radiation from the source radiation pulses 112 may propagate through the electro-optic modulator 130. The electro-optic modulator 130 may effectively allow only a slice 172 of each radiation pulse 112 from the pulsed laser source 110 to exit the electro-optic modulator 130.

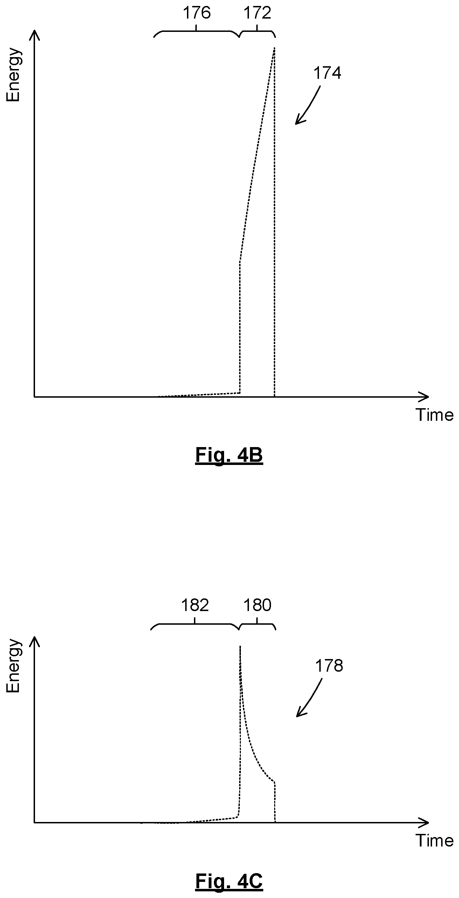

Figure 4B shows an enlarged view of an example pulse shape 174 (energy versus time) of a modified radiation pulse 132 produced by the electro-optic modulator 130. Note that in addition to the slice 172 of the source radiation pulse 112, the modified radiation pulses 132 may also comprise a pedestal portion 176. It will be appreciated that the pedestal portion 176 may be generated in a number of different ways, as is known in the art. In general, the apparatus 100 may allow some leakage of radiation through the electro-optic modulator 130 (in addition to the radiation that passes the electro-optic modulator due to the gating pulses 122) so as to form the pedestal portion 176.

The apparatus 100 shown in Figure 3 may form part of the drive laser system 16 shown in Figure 2. In particular, the apparatus 100 shown in Figure 3 may correspond to the laser system 18 (seed laser system 18) shown in Figure 2 and the modified radiation pulse 132 may correspond to the laser beam 20 (seed laser beam 20) shown in Figure 2. Note that, in general, the amplification system 19 may change the shape of the pulses of radiation being amplified. For example, the laser beam 21 that exits the amplification system 19 will, in general, have a different pulse shape to the laser beam 20 that enters the amplification system 19.

Figure 4C shows an example pulse shape 178 (energy versus time) of a pulse that may be formed by amplification of the modified radiation pulse 174 shape shown in Figure 4B. The pulse shape 178 comprises a main portion 180 and a pedestal portion 182.

The pedestal portion 182 may start of the order of 400-500 ns before the main portion 180 of the pulse and may have an intensity rising to of the order of 1 % of an intensity of a peak of the main portion 180 of the pulse. The off droplet pedestal energy may be of the order of 7 mJ.

It will be appreciated that the pedestal portion 180 may be generated in a number of different ways, as is known in the art. In general, the apparatus 100 may allow some leakage of radiation through the electro-optic modulator 130 (in addition to the radiation that passes the electro-optic modulator due to the gating pulses 122) so as to form the pedestal portion 182.

For example, the electric signal 122 may comprise one or more secondary pulses between successive pairs of the gating pulses. Atleast one of: an amplitude of one or more secondary pulses; a duration of one or more secondary pulses, and a phase of one or more secondary pulses relative to a relevant one of the gating pulses may be controlled to achieve a desired pedestal portion.

Additionally or alternatively, a small leakage may be created by (thin film) polarizers 136, 138 that may form part of the electro-optic modulator 130 so as to achieve a desired pedestal portion.

In some embodiments, the pedestal portion 182 precedes a main peak of the (amplified) modified radiation pulses by of the order of 400 to 500 ns.

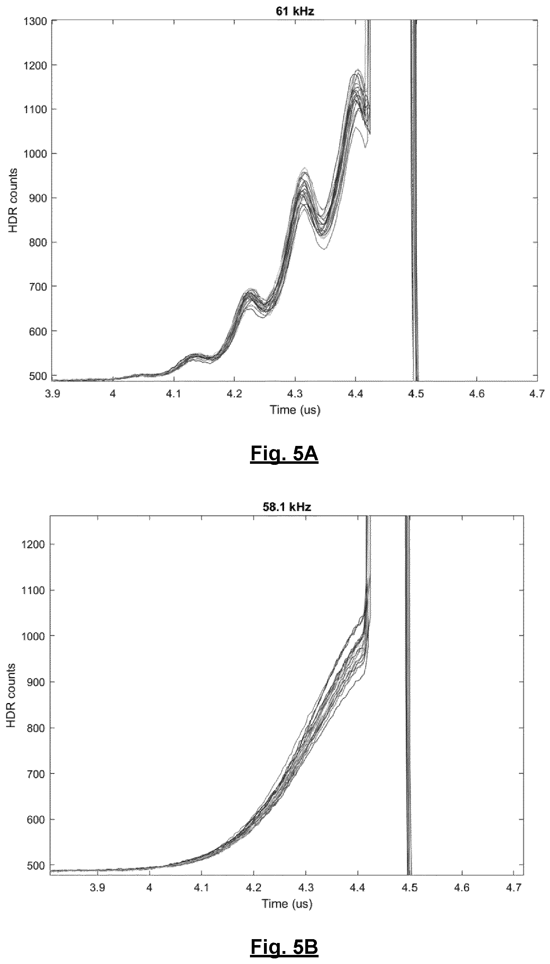

The inventors have observed that in some scenarios that there are fluctuations in the pedestal "waveform" 182, which can manifest itself at various repetition rates of the LPP source. That is, the intensity of the pedestal portion 182 may oscillate under certain conditions. Figures 5A and 5B both show enlarged portions of the pedestal portion 182 of the pulse shape 178 shown in Figure 4C which have been generated with different repetition rates. Figure 5A shows that at a first repetition rate the intensity of the pedestal portion 182 oscillates whereas Figure 5B shows that at a second repetition rate the intensity of the pedestal portion 182 does not oscillate.

The inventors have realized that, since electro-optic modulators 130 typically comprise a piezoelectric material 134, the electric signal 122 can excite sound waves in the material 134, which gives rise to a time-dependent refractive index. If the electric signal 122 excites any resonant frequencies of the electro-optic modulator 130 this can give rise to significant (and observable) fluctuations in the pedestal portion 182.

The temperature-control system 140 can control the temperature of the electro-optic modulator 130 (specifically the temperature of the first crystal 134). Advantageously, in turn, this can provide control over the resonant frequencies for oscillating stress, or sound waves, in the first crystal 134 of the electro-optic modulator 130. Furthermore, since the temperature-control system 140 is configured to control the temperature of the electro-optic modulator in dependence on the pulse repetition rate of the pulsed laser source 110, it can be used to ensure that the electric signal 122 does not excite a resonant frequency of the first crystal 134 of the electro-optical modulator 130. For example, as explained above, the LPP source SO may have a desired range of different repetition rates (for example a range of repetition rates of the order of 5 kHz). It may be that for at least a first range of repetition rates within this range, at a reference temperature *Tᵣ,* the electric signal 122 does not excite a resonant frequency of the first crystal 134 of the electro-optical modulator 130 but for at least a second range of repetition rates within this range, at the reference temperature *Tᵣ,* the electric signal 122 does excite at least one resonant frequency of the first crystal 134 of the electro-optical modulator 130. The reference temperature *Tᵣ* may, for example, be a nominal operating temperature of the electro-optical modulator 130. For such embodiments, the temperature-control system 140 may be configured to control the temperature of the electro-optic modulator 130 so as to be: (a) at the reference temperature *Tᵣ* when the pulsed laser source 110 is operating at a pulse repetition rate within the at least a first range of repetition rates; and (b) at a temperature *Tᵣ* ± Δ*T* that is shifted (by heating or cooling) from the reference temperature when the pulsed laser source 110 is operating at a pulse repetition rate within the at least a second range of repetition rates (where the electrical signal excites at least one resonant frequency). The magnitude of the shift of the temperature Δ*T* from the reference temperature *Tᵣ* may be sufficient to ensure that the electric signal 122 does not excite a resonant frequency of the electro-optical modulator 130.

Note that in some embodiments, the apparatus 100 shown in Figure 3 may be operable to operate in more than two temperature settings of the type described above. For example, there may be a third range of repetition rates and within this third range, at the reference temperature *Tᵣ,* the electric signal 122 does excite at least one resonant frequency of the electro-optical modulator 130. Note the second range of repetition rates may excite one resonant frequency of the electro-optical modulator 130 and the third range of repetition rates may excite a different resonant frequency of the electro-optical modulator 130. The temperature-control system 140 may be configured to control the temperature of the electro-optic modulator 130 so as to be: (a) at the reference temperature *Tᵣ* when the pulsed laser source 110 is operating at a pulse repetition rate within the at least a first range of repetition rates; (b) at a temperature *Tᵣ* ± Δ*T*₁ that is shifted (by heating or cooling) from the reference temperature when the pulsed laser source 110 is operating at a pulse repetition rate within the at least a second range of repetition rates; and (c) at a temperature *Tᵣ* ± Δ*T*₂ that is shifted (by heating or cooling) from the reference temperature by a different amount (Δ*T*₂) when the pulsed laser source 110 is operating at a pulse repetition rate within the at least a third range of repetition rates; and so on. In general, the temperature-control system 140 may be configured to control the temperature of the electro-optic modulator 130 so as to be: (a) at the reference temperature *Tᵣ* for some repetition rates; and (b) at *n* shifted temperatures *Tᵣ* ± Δ*Tᵢ* that are each shifted (by heating or cooling) from the reference temperature when the pulsed laser source 110 is operating at a pulse repetition rate within one of *n* different ranges of repetition rates (where *n* = 0,1,2,3, ...).

Note that in some embodiments, the electro-optic modulator 130 may be operated like a switch: by applying an activation voltage 122 at some times (synchronized with the radiation pulses 112) and applying no voltage at other times. Therefore, in some embodiments, the electric signal 122 may comprise a train of square wave pulses. Furthermore, note that such an electric signal 122 may comprise a plurality of Fourier components and that the amplitudes of these Fourier components may be dependent on: a repetition rate and a duty cycle of the train of square wave pulses.

In some embodiments, the temperature-control system 140 is configured to control the temperature of the electro-optic modulator 130 such that the electric signal 122 does not excite a resonant frequency of the electro-optical modulator 130.

It will be appreciated that, as used here, the electric signal 122 may be considered to not excite a resonant frequency of the electro-optical modulator if it drives the electro-optical modulator 130 to oscillate or vibrate at that resonant frequency with an amplitude that is below a threshold value. It will be further appreciated that different threshold values may apply for different resonant frequencies. It will be further appreciated that, in general, it may not be possible to specify these frequencies.

In practice, the electric signal 122 may be considered to not excite a resonant frequency of the electro-optical modulator 130 if it does not give rise a noticeable modulation (time variation or oscillation) of the intensity of the pedestal portion 182 of the (amplified) modified pulses. Furthermore, as explained above, it may be possible to empirically identify, for a given temperature of the electro-optical modulator 130, certain repetition rates of the electric signal 122 that will give rise to an unacceptable modulation or waviness of the intensity of the pedestal portion 182.

In some embodiments, the range of repetition rates that the pulsed laser source 110 can emit source radiation pulses at comprises at least one first repetition rate or a first range of repetition rates and at least one second repetition rate or a second range of repetition rates and the temperature-control system 140 may be configured to control the temperature of the electro-optic modulator 130 such that: (a) when the pulsed laser source 110 is operating at a repetition rate of the at least one first repetition rate or the first range of repetition rates the temperature of the electro-optic modulator 130 is maintained at a first temperature *T*₁; and (b) when the pulsed laser source 110 is operating at a repetition rate of the at least one second repetition rate or the second range of repetition rates the temperature of the electro-optic modulator 130 is maintained at a temperature that is different to the first temperature.

In use, the pulsed laser source 110 may have a desired range of different repetition rates. For example, the pulsed laser source 110 may operate at a repetition rate range of 50-55 kHz. It may be that for the at least one first repetition rate or range of repetition rates, at the first temperature *T*₁, the electric signal 122 does not excite a resonant frequency of the electro-optical modulator 130 but for the at least a second repetition rate or range of repetition rates, at the first temperature *T*₁, the electric signal 122 does excite at least one resonant frequency of the electro-optical modulator 130. When the pulsed laser source 110 is operating at a pulse repetition rate from the at least one second repetition rate or range of repetition rates the electro-optical modulator 130 may be maintained at a temperature *T*₁ ± Δ*Tᵢ* that is shifted (by heating or cooling) from the first temperature. The magnitude of the shift of the temperature Δ*Tᵢ* from the first temperature *T*₁ may be sufficient to ensure that the electric signal 122 does not excite a resonant frequency of the electro-optical modulator 130. Note that, in general, different temperature shifts Δ*Tᵢ* may be used for different ranges of repetition rates that would, if operating at the first temperature *T*₁, excite different resonant frequencies.

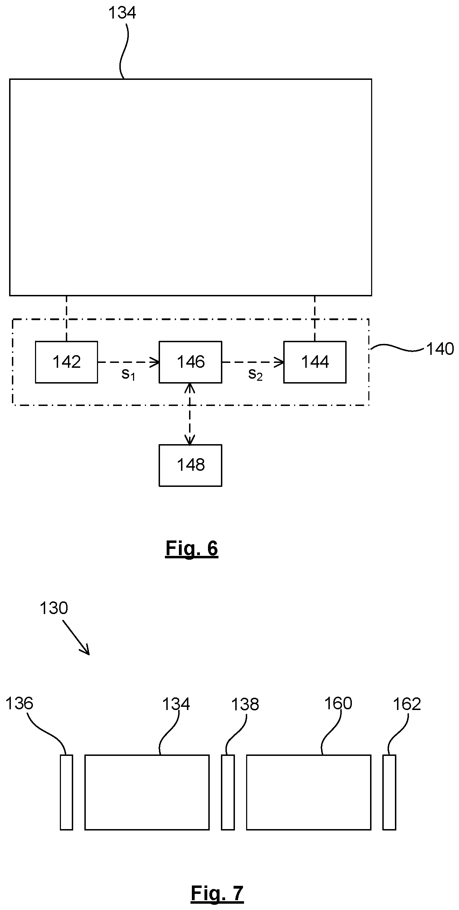

As shown schematically in Figure 6, in some embodiments, the temperature-control system 140 may comprise: at least one temperature sensor 142; at least one heater and/or cooler 144; and a processor 146.

The at least one temperature sensor 142 may be configured to determine a temperature of the electro-optical modulator 130. For example, the at least one temperature sensor 142 may be configured to determine a temperature of the first crystal 134 of the electro-optical modulator 130. The at least one heater and/or cooler 144 may be operable to heat and/or cool the electro-optical modulator 130 so as to influence the temperature of the electro-optical modulator 130. For example, the at least one heater and/or cooler 144 may be operable to heat and/or cool the first crystal 134 of the electro-optical modulator 130 so as to influence the temperature thereof. The processor 146 may be configured to: (a) receive at least one signal s₁ from the at least one temperature sensor 142 that is indicative of the temperature of the electro-optical modulator 130. The processor 146 may be further configured to: (b) to send at least one control signal s₂ to the at least one heater and/or cooler 144 so as to maintain the temperature of the electro-optical modulator 130 at a set-point temperature that is dependent on the pulse repetition rate of the pulsed laser source 110.

The processor 146 may be referred to as a controller. The processor 146 may implement any suitable (feedback) control loop to maintain the electro-optical modulator 130.

In some embodiments, the apparatus 100 may further comprise memory 148 and wherein the processor 146 may be operable to access from the memory 148 a set-point temperature that is dependent on the pulse repetition rate of the pulsed laser source 110. As discussed further below, the memory 148 may store a look-up table or similar.

In some embodiments, the apparatus 100 may further comprise a main processor 150. The main processor 150 may be configured to control operation of: (a) the pulsed laser source 110; (b) the electric system 120; and (c) the temperature-control system 140.

The main processor 150 may be referred to as a main controller. The main controller 150 may, for example, control the repetition rate of the pulsed laser source 110. The main controller 150 may, for example, control the electric signal 122 generated by the electric system 120. The main controller 150 may, for example, control the temperature-control system 140 so as to control the temperature of the electro-optic modulator 130 (in dependence on the pulse repetition rate of the pulsed laser source 110).

Note the main processor 150 may be separate from the processor 146 of the temperature-control system 140. Alternatively, a common processor may provide the functionality of both the main processor 150 and the processor 146 of the temperature-control system 140.

In some embodiments, the main processor 150 may be operable to receive a control signal 152 and to control operation of at least one of: the pulsed laser source 110; the electric system 120; and/or the temperature-control system 140 in dependence on the control signal 152. For example, the control signal 152 may be generated by processor or controller of an LPP radiation source SO that the apparatus 100 shown in Figure 3 forms part of.

In some embodiments, the main processor 150 may be operable to send a control signal 154 to the pulsed laser source 110. In some embodiments, the main processor 150 may be operable to send a control signal 154 to the electric system 120. In some embodiments, the main processor 150 may be operable to send a control signal 156 to the temperature-control system 140.

As explained above, the electro-optic modulator 130 may comprise: a first crystal 134; a first polarizer 136; and a second polarizer 138. The second polarizer 138 may be oriented orthogonally to the first polarizer 136 and the first crystal 134 may have a controllable birefringence (that can be controlled by the electric signa 122). In use, the electro-optic modulator 130 may act as a switch that allows only a portion of source radiation pulse 112 to pass therethrough.

In some embodiments the electro-optic modulator 130 may comprise additional crystals and/or polarizers. For example, as shown schematically in Figure 7 in some embodiments, the electro-optic modulator 130 may further comprise: a second crystal 160 arranged to receive radiation from the second polarizer 138; and a third polarizer 162 oriented parallel to the first polarizer 136 and arranged to receive radiation from the second crystal 160. The second crystal 160 may also have a controllable birefringence (that can be controlled by the electric signal 122). For such embodiments, the temperature-control system 140 may be operable to control a temperature of each of the first crystal 134 and the second crystal 160. For example, the temperature-control system 140 may be operable to control a temperature of each of the first crystal 134 and the second crystal 160 independently.

Some embodiments of the present disclosure relate to a new drive laser device for a laser produced plasma radiation source. The drive laser device may be generally of the form of the driver laser system 16 shown in Figure 2 and may comprise: a seed laser module comprising the apparatus 100 shown in Figure 3; and an amplifier configured to amplify the modified radiation pulses 132 to form drive radiation pulses.

The new drive laser device may further comprise a pre-pulse seed laser module (not shown) configured to output pre-pulse seed pulses in advance of the modified radiation pulses 132 output by the seed laser module 100.

Some embodiments of the present disclosure relate to a new laser produced plasma source comprising such a new drive laser device. The new laser produced plasma source maybe generally of the form of the laser produced plasma source SO shown in Figure 1 and described above. The new laser produced plasma source may comprise a target material delivery system 3 configured to deliver target material to a target location 4 and the new drive laser device may be arranged to irradiate target material at the target location 4 with drive radiation pulses 2 so as to form a plasma 7.

The laser produced plasma source may further comprise a radiation collector 5 configured to collect radiation B emitted by the plasma 7.

Some embodiments of the present disclosure relate to an exposure apparatus comprising the new laser produced plasma source. The new exposure apparatus may be a lithographic apparatus and may be generally of the form of the lithographic apparatus LA shown in Figure 1.

The exposure apparatus may further comprise: an illumination system IL operable to receive radiation B emitted by the plasma 7 and to illuminate an illumination region therewith; a support structure MT configured to support a patterning device MA such that the patterning device MA is positionable in the illumination region; a substrate table WT configured to support a substrate W; and a projection system PS operable to form an image of a patterning device MA supported by the support structure MT on a substrate W supported by the substrate table WT.

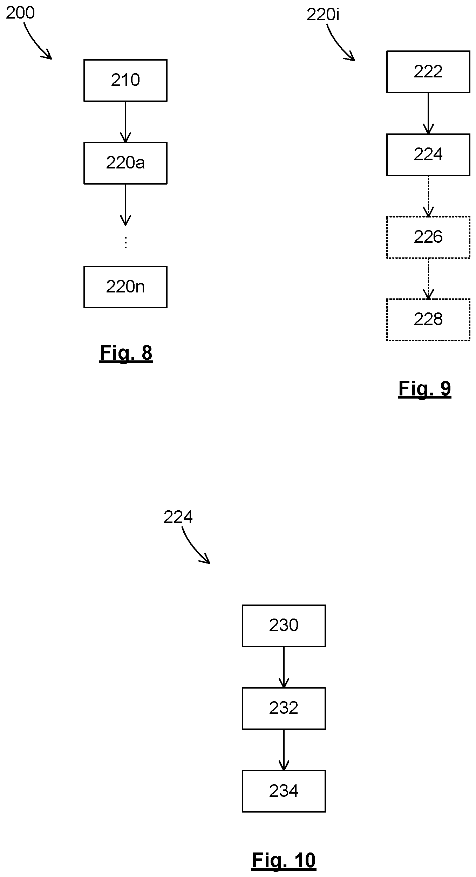

Some embodiments of the present disclosure relate to a method of calibrating the apparatus 100 shown in Figure 3. An embodiment of such a method 200 of calibrating the apparatus 100 is shown schematically in Figures 8, 9 and 10 and is now described.

The method 200 comprises a step 210 of maintaining the electro-optic modulator 130 at a fixed temperature and, for each of a plurality of different repetition rates within the range of repetition rates, carrying out a procedure 220a-220n. As shown schematically in Figure 9, each such procedure 220i comprises: a step 222 of using the apparatus 100 to generate radiation pulses comprising a pedestal portion 162 succeeded by a peak portion 160; and a step 224 of determining whether or not the pedestal portions 162 of the generated radiation pulses oscillate.

The method 200 shown in Figures 8 and 9 allows for the apparatus 100 to be calibrated. In particular, for the fixed temperature of the electro-optical modulator 130, it allows for any repetition rates of the electric signal 122 that will give rise to an unacceptable modulation or waviness of the intensity of the pedestal portion 162 to be empirically identified. This information can be stored in memory 148 (for example as a look up table) for that fixed temperature and can be used by the temperature-control system 140 of the apparatus 100 to control the temperature of the electro-optic modulator 130 (in dependence on the pulse repetition rate of the pulsed laser source 110) so as to avoid excitation of any resonant frequencies of the electro-optical modulator 130 in use.

The fixed temperature (fixed at step 210) may, for example, comprise a nominal operating temperature of the electro-optic modulator 130.

Note that it may be that, in practice, the oscillation of the pedestal portions 162 of the generated radiation pulses may only be apparent after amplification of an initial seed pulse 132. Therefore, in some embodiments, the determination of whether or not the pedestal portions 162 of the generated radiation pulses oscillate may be made after the initial seed pulse has been amplified.

As shown schematically in Figure 10, in some embodiments of the method 200 determining whether or not the pedestal portions 162 of the generated radiation pulses oscillate (at step 224) may comprise: a step 230 of determining a shape of the generated radiation pulses; a step 232 of fitting a function to the determined shape so as to determine at least one parameter; and a step 234 of determining whether or not the pedestal portions of the generated radiation pulses oscillate based on one or more of the at least one parameters.

For example, the fitting function may be performed as a least squares fit to determine a plurality of parameters. The function may, for example, comprise a polynomial function. It may be determined that the pedestal portions 162 of the generated radiation pulses do not oscillate if the coefficients of one or more higher-order terms are below a threshold value. Alternatively, the function may comprise the sum of: (a) a portion (for example a low-order polynomial) that can describe a nominal shape of the pedestal potion 162; and (b) an oscillating portion (for example a sine curve). It may be determined that the pedestal portions 162 of the generated radiation pulses do not oscillate if the coefficient(s) of the oscillating portion are below a threshold value.

Optionally, each procedure 220i carried out for each of the plurality of different repetition rates within the range of repetition rates may further comprise a step 226 of storing in memory 148 whether or not the pedestal portions 162 of the generated radiation pulses oscillate.

Optionally, each procedure 220i carried out for each of the plurality of different repetition rates within the range of repetition rates may further comprise a step 228 of storing in memory 158 a suitable operating temperature for that repetition rate. For example, if the pedestal portions 162 of the generated radiation pulses do not oscillate (i.e. are determined not to oscillate at step 224) then the fixed temperature (that the electro-optical modulator 130 was maintained at step 210) may be stored as a suitable operating temperature for that repetition rate. The fixed temperature *T_{f}* may be referred to as a first temperature *T*₁ or a reference temperature *Tᵣ.* Additionally, if the pedestal portions 162 of the generated radiation pulses do oscillate (i.e., are determined to oscillate at step 224) then a different temperature to the fixed temperature may be stored as a suitable operating temperature for that repetition rate. The different temperature may be a shifted temperature *T_{f}* ± Δ*Tᵢ* that is shifted (by heating or cooling) from the fixed temperature *T_{f}.* Note that, in general, different temperature shifts Δ*Tᵢ* may be used for different repetition rates that would, if operating at the fixed temperature *T_{f},* excite different resonant frequencies.

In some embodiments of the method 200 the plurality of different repetition rates within the range of repetition rates (for which the procedure 220i is carried out) may comprise a plurality of equally spaced repetition rates. In some embodiments, this sampling of the range of repetition rates may be sufficiently fine so as to observe all sub-ranges of the range of repetition rates that may result in an unacceptable level of oscillation of the pedestal portion 162.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

Where the context allows, embodiments of the invention may be implemented in hardware, firmware, software, or any combination thereof. Embodiments of the invention may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic storage media; optical storage media; flash memory devices; electrical, optical, acoustical or other forms of propagated signals (e.g. carrier waves, infrared signals, digital signals, etc.), and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc. and in doing that may cause actuators or other devices to interact with the physical world.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. An apparatus suitable for use in a laser-produced plasma source, the apparatus comprising:
a pulsed laser source configured to emit source radiation pulses at a pulse repetition rate from a range of repetition rates;
an electric system configured to provide an electric signal;
an electro-optic modulator coupled to the electric system and configured to receive the source radiation pulses and to produce modified radiation pulses under control of the electric signal; and
a temperature-control system operable to control a temperature of the electro-optic modulator;
wherein the temperature-control system is configured to control the temperature of the electro-optic modulator in dependence on the pulse repetition rate of the pulsed laser source.

2. The apparatus of claim 1 wherein the temperature-control system is configured to control the temperature of the electro-optic modulator such that the electric signal does not excite a resonant frequency of the electro-optical modulator.

3. The apparatus of claim 1 or claim 2 wherein the range of repetition rates that the pulsed laser source can emit source radiation pulses at comprises at least one first repetition rate or a first range of repetition rates and at least one second repetition rate or a second range of repetition rates and wherein the temperature-control system is configured to control the temperature of the electro-optic modulator such that:
when the pulsed laser source is operating at a repetition rate of the at least one first repetition rate or the first range of repetition rates the temperature of the electro-optic modulator is maintained at a first temperature *T*₁; and
when the pulsed laser source is operating at a repetition rate of the at least one second repetition rate or the second range of repetition rates the temperature of the electro-optic modulator is maintained at a temperature that is different to the first temperature.

4. The apparatus of any preceding claim wherein the temperature-control system comprises:
at least one temperature sensor configured to determine a temperature of the electro-optical modulator;
at least one heater and/or cooler operable to heat and/or cool the electro-optical modulator so as to influence the temperature of the electro-optical modulator; and
a processor configured to: (a) receive at least one signal from the at least one temperature sensor that is indicative of the temperature of the electro-optical modulator; and (b) to send at least one control signal to the at least one heater and/or cooler so as to maintain the temperature of the electro-optical modulator at a set-point temperature that is dependent on the pulse repetition rate of the pulsed laser source.

5. The apparatus of claim 4 further comprising memory and wherein the processor is operable to access from the memory a set-point temperature that is dependent on the pulse repetition rate of the pulsed laser source.

6. The apparatus or any preceding claim further comprising a main processor configured to control operation of: (a) the pulsed laser source; (b) the electric system; and (c) the temperature-control system.

7. The apparatus of claim 6 wherein the main processor is operable to receive a control signal and to control operation of at least one of: the pulsed laser source; the electric system; and/or the temperature-control system in dependence on the control signal.

8. The apparatus of any preceding claim wherein the electric system and/or the electro-optic modulator are configured such that the modified radiation pulses produced by the electro-optic modulator comprise a pedestal portion after amplification.

9. The apparatus of any preceding claim wherein the electro-optic modulator comprises:
a first polarizer arranged to receive radiation from the pulsed laser source;
a first crystal arranged to receive radiation from the first polarizer; and
a second polarizer oriented orthogonally to the first polarizer and arranged to receive radiation from the first crystal.

10. A drive laser device for a laser produced plasma radiation source, the drive laser device comprising:
a seed laser module comprising the apparatus according to any preceding claim; and
an amplifier configured to amplify the modified radiation pulses to form drive radiation pulses.

11. A laser produced plasma source comprising:
a target material delivery system configured to deliver target material to a target location; and
a drive laser device according to claim 10 arranged to irradiate target material at the target location with drive radiation pulses so as to form a plasma.

12. An exposure apparatus comprising the laser produced plasma source of claim 11.

13. A method of calibrating the apparatus of any one of claims 1 to 9, the method comprising:
maintaining the electro-optic modulator at a fixed temperature and, for a plurality of different repetition rates within the range of repetition rates:
using the apparatus to generate radiation pulses comprising a pedestal portion succeeded by a peak portion; and
determining whether or not the pedestal portions of the generated radiation pulses oscillate.

14. The method of claim 13 wherein determining whether or not the pedestal portions of the generated radiation pulses oscillate comprises:
determining a shape of the generated radiation pulses;
fitting a function to the determined shape so as to determine at least one parameter; and
determining whether or not the pedestal portions of the generated radiation pulses oscillate based on one or more of the at least one parameters.

15. The method of claim 13 or claim 14 further comprising, for each of the plurality of different repetition rates, storing in memory: (a) whether or not the pedestal portions of the generated radiation pulses oscillate; and/or (b) a suitable operating temperature for that repetition rate.
